# EUROPÄISCHE PATENTSCHRIFT

(11) **EP 2 270 084 B1**
(45) Veröffentlichungstag und Bekanntmachung des Hinweises auf die Patenterteilung: **08.02.2012**
(21) Anmeldenummer: 10168016.3
(22) Anmeldetag: 30.06.2010
(51) Int. Cl.: C08K 3/00, C08L 61/06, C08J 3/12, C09C 3/00, C08J 3/21, C08K 3/22

(54) **Granulat und Verfahren zu dessen Herstellung**
Granulate and method for its production
Granulé et procédé destiné à sa fabrication

(30) Priorität: 30.06.2009 DE 102009027364
(43) Veröffentlichungstag der Anmeldung: 05.01.2011
(73) Patentinhaber: Hüttenes-Albertus Chemische-Werke GmbH, 40549 Düsseldorf (DE)
(72) Erfinder: Fourberg, Christian, 41238, Mönchengladbach (DE); Beck, Erhard, 67227, Frankenthal (DE); Ladegourdie, Gerard, 40237, Düsseldorf (DE)
(74) Vertreter: Eisenführ, Speiser & Partner

(56) Entgegenhaltungen:
- DE-A1- 2 656 866
- DE-A1- 2 734 930
- DE-A1- 4 142 251
- DE-B- 1 117 299
- GB-A- 1 206 339
- US-A1- 2005 019 574
- DATABASE WPI Week 199233 Thomson Scientific, London, GB; AN 1992-275157 XP002600879 -& SU 1 678 640 A1 (KOCHKINA A N) 23. September 1991 (1991-09-23)
- DATABASE WPI Week 200637 Thomson Scientific, London, GB; AN 2006-355209 XP002600880 -& JP 2006 083320 A (SUMITOMO BAKELITE CO LTD) 30. März 2006 (2006-03-30)
- DATABASE WPI Week 198801 Thomson Scientific, London, GB; AN 1988-005256 XP002154940 -& SU 1 310 411 A (FILATOV V K) 15. Mai 1987 (1987-05-15)

## Beschreibung

Die vorliegende Erfindung betrifft ein Granulat, in dem weniger als 10 Gew.-% der Teilchen des Granulats, bezogen auf die Gesamtmenge des Granulats, eine Teilchengröße von unter 1 mm besitzen, wobei das Granulat ein gehärtetes Phenolharz-haltiges Bindemittel und einen durch das Bindemittel gebundenen teilchenförmigen anorganischen Füllstoff umfasst, wobei mindestens 10 Gew.-% der Teilchen des gebundenen Füllstoffes, bezogen auf die Gesamtmenge des gebundenen Füllstoffes, eine Teilchengröße von kleiner als 1 mm besitzen. Die Erfindung betrifft zudem ein Verfahren zur Herstellung eines solchen Granulats. Die vorstehend genannten Granulate können erfindungsgemäß Verwendung finden zum Beispiel als Verschlackungsmittel, Schlackenkonditionierer oder Flussmittel.

In der Industrie fallen große Mengen anorganischer Abfallstoffe, zum Beispiel in Form von mineralischen Industrieabfällen an. Diese Abfallstoffe müssen entweder aufbereitet und wiederverwendet oder entsorgt werden. Aus Kostengründen ist in der Regel eine Wiederverwendung, einschließlich einer eventuell notwendigen Aufbereitung zu bevorzugen. Ein Teil dieser Abfallstoffe fällt jedoch in Form von sehr feinkörnigen Partikeln an. Die weitere Aufbereitung, Verarbeitung und Verwendung solcher anorganischen Abfallstoffe ist oft deshalb erschwert, weil diese Partikel mit sehr kleinen Partikelgrößen enthalten können, die beim Verarbeiten zu einer erheblichen Staubentwicklung führen, so dass es oft schwer fällt, die Staubmengen in gesundheitlich vertretbaren Grenzen zu halten und die bestehenden Richtlinien und Gesetze des Arbeitsschutzes zu erfüllen. Silikose und andere Erkrankungen, insbesondere Lungenkrankheiten können die Folge sein. Von besonderer Bedeutung sind in dieser Hinsicht der lungengängige Feinstaubanteil mit Partikelgrößen von unterhalb 5 µm und der silikogene Quarzanteil des Staubs.

Bei solchen feinkörnigen anorganischen Abfallstoffen kann es sich zum Beispiel um den feinkörnigen Anteil von feuerfesten Ausbruchsmaterialien, um den feinkörnigen Anteil der Zerkleinerungsrückstände feuerfester Ausbruchsmaterialien, um Filterrückstände von Staubfiltern oder um Prozessabfallstäube, insbesondere um Mineralstäube handeln. Im Folgenden wird die Erfindung insbesondere in Hinblick auf die Aufbereitung und Wiederverwendung des feinkörnigen Anteils von Zerkleinerungsrückständen feuerfester Ausbruchsmaterialien beschrieben. Die Erfindung ist jedoch nicht auf solche Ausführungsformen begrenzt.

Im Feuerfestbereich, insbesondere in der Eisen- und Stahlindustrie, der Glasindustrie, der Kalk- und Zementindustrie oder der NE-Metallindustrie und besonders in Gießereien und Stahlwerken fallen große Mengen feuerfester Ausbruchsmaterialien, zum Beispiel in Form von Pfannenausbruch oder Ofenausbruch an. Solche feuerfesten Ausbruchsmaterialien und andere anorganische Abfallstoffe enthalten oft unerwünschte oder schädliche Beimengungen in Form von Säuren, Laugen, Lösungsmitteln, Schwermetallen, giftigen Substanzen und/oder anderen Verunreinigungen. Ein Teil dieser feuerfesten Ausbruchsmaterialien oder anderen anorganischen Abfallstoffe kann nach Aufarbeitung weiter verwendet werden. Ein weiterer Teil der feuerfesten Ausbruchsmaterialien oder anderen anorganischen Abfallstoffe, insbesondere der feinkörnige Anteil beziehungsweise der bei der Aufarbeitung, insbesondere beim Zerkleinern der feuerfesten Ausbruchsmaterialien oder anderen anorganischen Abfallstoffe entstehende feinkörnige Anteil muss jedoch zum großen Teil unter erheblichen Kosten entsorgt werden.

Eine Wiederverwendung von mit Metallen, insbesondere Schwermetallen belasteten feinkörnigen Zerkleinerungsrückständen, insbesondere Mahlrückständen feuerfester Ausbruchsmaterialien, wie zum Beispiel feinkörnige Zerkleinerungsrückstände von Pfannen- oder Ofenausbruch (aus dem Gießereibetrieb), wäre zwar in der Feuerfestindustrie nach eigenen Erkenntnissen möglich. Dies gilt insbesondere da dort verwendete Rohstoffe für Verschlackungsmittel, Schlackenkonditionierer und Flussmittel recht ähnliche Zusammensetzungen wie diese feinkörnigen Zerkleinerungsrückstände von feuerfesten Ausbruchsmaterialien haben und zudem ohnehin mit Metallen und Schwermetallen in Berührung kommen. Auch hier sind jedoch kleine und kleinste Partikel unerwünscht, da Verschlackungsmittel und Schlackenkonditionierer ebenso wie Flussmittel den in Hochöfen und anderen Schmelzverfahren vorkommenden Gasströmen ausgesetzt sind, die kleine Partikel solcher feinkörnigen Zerkleinerungsrückstände von feuerfesten Ausbruchsmaterialien, mit sich reißen könnten. Dies könnte zur Überlastung der Abgasreinigungssysteme führen und würde zudem die Zusammensetzung der Verschlackungsmittel, Schlackenkonditionierer und Flussmittel verändern, so dass ein kontrolliertes Verfahren nicht mehr möglich wäre.

Phenolharze sind Kunstharze, die durch Kondensation von Phenolen und Aldehyden und ggf. weiteren Bestandteilen durch Kondensation gewonnen werden. Die Verwendung von Phenolharz-haltigen Bindemitteln für eine Vielzahl von Anwendungen ist seit langem bekannt. Siehe hierzu zum Beispiel "Phenolic Resins"Andre Knop, Louis A. Pilato, Seiten 156 bis 306. Auch die Verwendung von Phenolharz-haltigen Bindemitteln zum Binden von teilchenförmigen anorganischen Füllstoffen, zum Beispiel zum Binden von Sand und ähnlichen Materialien zur Herstellung von Formen in der Gießereitechnik ist zum Beispiel in "Phenolic Resins" Andre Knop, Louis A. Pilato, Seiten 256 bis 267 beschrieben worden.

Bestimmte Granulate, die neben anorganischen Füllstoffen nicht-gehärtete härtbare Phenolharze enthalten, sind bekannt. Die EP 0 038 292 B2 beschreibt die Herstellung von trockenen und rieselfähigen Mischungen aus flüssigen polymerisierbaren Kunstharzen, mineralischen Füllstoffen und synthetischem, kristallinem Calciumsilikat. Dort wird auch die Verwendung von Phenolharzen erwähnt. In einigen Beispielen werden Granulate hergestellt, die Kunstharze enthalten. Auch Phenolharze werden dort als geeignet offenbart. Die dort hergestellten Granulate enthalten die Kunstharze jedoch in nicht gehärteten Zustand. Die Verwendung von synthetischem, kristallinem Calciumsilikat ist gemäß der EP 0 038 292 B2 unverzichtbar. Die EP 0 376 884 A2 offenbart ein rieselfähiges Granulat, das einen anorganischen oder organischen Füllstoff und ein Phenolharz-haltiges Bindemittel enthält. Auch dieses Granulat enthält nicht-gehärtetes Bindemittel. Die Herstellung der Granulate erfolgt in einem Wirbelschichtverfahren. Die Granulate werden bevorzugt als Press- oder Beschichtungspulver für die Beschichtung von elektrischen oder elektronischen Bauteilen eingesetzt. Da die beschriebenen Granulate die Phenolharze nicht in gehärtetem Zustand enthalten, ist ihre Lagerfähigkeit begrenzt.

SU 1678640 A1 betrifft ein Verfahren zur Herstellung granulierter glasgefüllter Phenolharze unter Verwendung von Abfällen glasarmierter Materialien.

JP 2006 083320 offenbart eine Phenolharz-Formmasse umfassend ein Novolak-Phenolharz und Magnesiumoxid.

DE 41 42 251 A1 betrifft ein Recyclingverfahren, durch das nicht faserverstärkte duroplastische Kunststoffe zu duroplastischen Formmassen verarbeitet werden und im Spritzgießverfahren oder im Formpressverfahren zu neuen Kunststoffgegenständen geformt werden können.

DE 26 56 866 betrifft ein Verfahren zum Herstellen einer granulierten, wärmehärtbaren, ein Novolak-Phenolharz enthaltenden Form- oder Press-Masse, die keine Neigung besitzt, Staub freizugeben, und durch Spritzgussverfahren zu Fertigteilen verarbeitet werden kann.

SU 1310411 offenbart eine Formmasse umfassend ein Novolak-Phenolharz und sowie eine Mischung aus Kreide und Abfällen aus der Produktion von Asbestzement als Füllstoff.

US 2005/0019574 A1 betrifft ein teilchenförmiges Material, das mit einem thermoplastischen Elastomer behandelt worden ist, und seine Herstellung. Dieses Material kann als Stützmittel für Bohrlöcher, Kiesfüllung oder als Gießerelsand für Formen und Kerne eingesetzt werden.

GB 1 206 339 betrifft ein Reibmaterial für Bremsbeläge.

DE 27 34 930 betrifft ein Verfahren zum Herstellen von Novolak-Phenolharz-Verbindungen, die insbesondere für den Spritzguss geeignet sind, und zwar in Form von fließfähigem Granulat mit geringer Staubungsneigung.

In der WO 94/29381 werden asbestfreie Formmassen auf der Basis von Phenol-Formaldehyd-Harzen offenbart, die mit einem Turbomischverfahren und Wasserzusatz unter Erwärmung auf 100 °C hergestellt werden. Die Formmassen bestehen aus 20 bis 30 Gewichtsprozent Novolakharz, kurzfaserigen Glasfasern und langfaserigen Glasfasern mit zusammen etwa 30 Gewichtsprozent und Füllstoffen. Die verwendeten hohen Anteile an Phenolharz und die Erwärmung auf 100°C machen das Verfahren vergleichsweise unwirtschaftlich für die Granulierung von großen Mengen von Füllstoffen, insbesondere Abfallstoffen.

Es war die allgemeine Aufgabe der vorliegenden Erfindung, anorganische Abfallstoffe, die Partikel mit kleinen oder sehr kleinen Partikelgrößen enthalten der Wiederverwendung, zugänglich zu machen. Es war eine spezielle Aufgabe der vorliegenden Erfindung, feinkörnige Zerkleinerungsrückstände von feuerfesten Ausbruchsmaterialien, insbesondere von Pfannen- oder Ofenausbruch, der Wiederverwendung zugänglich zu machen. Es war insbesondere eine Aufgabe der vorliegenden Erfindung, feinkörnige Zerkleinerungsrückstände von feuerfesten Ausbruchsmaterialien aus Backenbrechern, Mineralmühlen und Mahlwerken der Wiederverwendung zugänglich zu machen. Es war ebenfalls die Aufgabe der vorliegenden Erfindung, anorganische Abfallstoffe, die Partikel mit kleinen oder sehr kleinen Partikelgrößen enthalten, mittels eines ökonomischen Aufbereitungsprozesses der Wiederverwendung zugänglich zu machen. Eine weitere Aufgabe der vorliegenden Erfindung war es, anorganische Abfallstoffe, die Partikel mit kleinen oder sehr kleinen Partikelgrößen enthalten, so aufzubereiten, dass eine Wiederverwendung ohne oder mit geringerer gesundheitlicher Gefährdung möglich ist.

Diese Aufgabe wird erfindungsgemäß gelöst durch ein Granulat, in dem weniger als 10 Gew.-% der Teilchen des Granulats, bezogen auf die Gesamtmenge des Granulats, eine Teilchengröße von unter 1 mm besitzen,
wobei das Granulat ein gehärtetes Phenolharz-haltiges Bindemittel und einen durch das Bindemittel gebundenen teilchenförmigen anorganischen Füllstoff umfasst,
wobei mindestens 10 Gew.-% der Teilchen des gebundenen Füllstoffes, bezogen auf die Gesamtmenge des gebundenen Füllstoffes, eine Teilchengröße von kleiner als 1 mm besitzen.

Ein teilchenförmiger anorganischer Füllstoff ist dabei ein Feststoff, der im Wesentlichen, mindestens jedoch zu 50 Gew.-%, bevorzugt zu mehr als 95 Gew.-%, besonders bevorzugt zu mehr als 98 Gew.-% und ganz besonders bevorzugt zu mehr als 99 Gew.-% aus anorganischen Feststoffen besteht. Dabei ist es bevorzugt, dass nicht mehr als 5 Gew.-%, besonders bevorzugt nicht mehr als 2 Gew.-%, ganz besonders bevorzugt nicht mehr als 1 Gew.-% und am meisten bevorzugt nicht mehr als 0,1 Gew.-%, bezogen auf die Gesamtmenge des teilchenförmigen anorganischen Füllstoffes, in Wasser löslich sind. Die Bestimmung des Anteils wasserlöslicher Bestandteile erfolgt dabei gemäß DIN EN 38414-S4 (Bestimmung der Eluierbarkeit mit Wasser).

Es besteht in der Industrie ein hoher Bedarf, anorganische Abfallstoffe und insbesondere deren Zerkleinerungsrückstände gewinnbringend weiter zu verarbeiten, anstatt sie mit hohen Kosten zu entsorgen. Das Granulat der vorliegen Erfindung ermöglicht es, Zerkleinerungsrückstände von anorganischen Abfallstoffen wiederzuverwerten und Sie in der Feuerfestindustrie, der Bauindustrie oder anderen Industrien einzusetzen. Im Folgenden wird die vorliegende Erfindung insbesondere in Hinblick auf die Wiederverwendung von Pfannen- und Ofenausbruch und insbesondere deren Zerkleinerungsrückstände beschrieben. Sie ist aber nicht auf diese Ausführungsformen beschränkt. Ganz besonders bevorzugt ist ein Granulat wie vorstehend beschrieben wobei der teilchenförmige anorganische Füllstoff anorganische Abfallstoffe umfasst. Hierbei sind wiederum als anorganische Abfallstoffe bevorzugt Zerkleinerungsrückstände aus feuerfesten Ausbruchsmaterialien der Eisen- und Stahlindustrie, der Glasindustrie, der Kalk- und Zementindustrie oder der NE-Metallindustrie. Für die Zerkleinerung von Feststoffen sind eine Vielzahl von Maschinen und Hilfsmitteln bekannt. Als Beispiele seien hier nur Mühlen und Brecher, insbesondere Backenbrecher genannt. Ziel einer Zerkleinerung von Feststoffen ist es in der Regel, partikuläre Feststoffe oder Gemische von partikulären Feststoffen herzustellen, die eine kleinere Teilchengröße besitzen als die Ausgangsstoffe. Die aus der Zerkleinerung hervorgehenden Partikel sollen dabei in der Regel möglichst eine einheitliche vorbestimmte Teilchengröße besitzen oder ihre Teilchengröße soll in einem vorbestimmten Teilchengrößenbereich liegen. Partikel, die nach einem Zerkleinerungsvorgang, noch immer eine Teilchengröße besitzen, die größer als die vorbestimmte Teilchengröße ist, werden in aller Regel erneut einem Zerkleinerungsvorgang unterworfen. Partikel, die nach einem Zerkleinerungsvorgang eine Partikelgröße haben, die kleiner als die gewünschte Partikelgröße ist und die sich ohne Aufarbeitung nicht anderweitig verwerten lassen, bilden den Zerkleinerungsrückstand.

Die vorliegende Erfindung betrifft insbesondere ein erfindungsgemäßes Granulat wie vorstehend beschrieben, wobei der teilchenförmige anorganische Füllstoff Zerkleinerungsrückstände von Pfannen- oder Ofenausbruch enthält. Dabei ist wiederum besonders bevorzugt ein erfindungsgemäßes Granulat wie vorstehend beschrieben, wobei der teilchenförmige anorganische Füllstoff zu mindestens 40 Gew.-%, bezogen auf das Gesamtgewicht des teilchenförmigen anorganischen Füllstoffs, aus Zerkleinerungsrückständen besteht, insbesondere aus Zerkleinerungsrückständen von Pfannen- oder Ofenausbruch, die bei dem Zerkleinern mit einem Backenbrecher oder durch Mahlen entstanden sind.

Metalloxide haben einen hohen Anteil an den industriell anfallenden anorganischen Abfallstoffen. Sie sind in der Regel nicht wasserlöslich und deshalb nur sehr schwer wieder aufzubereiten oder weiterzuverwenden. Ihr Anteil an kleinen und kleinsten Partikeln (Feinstaubanteil) ist häufig für Menschen gesundheitsschädlich (zum Beispiel Silikose, Asbestose) und es besteht deshalb ein besonderer Bedarf, Metalloxide, insbesondere Metalloxide enthaltende anorganische Abfallstoffe mit hohem Feinstaubanteil in Form von Granulaten der Wiederverwendung zuzuführen. Bevorzugt ist daher ein Granulat wie vorstehend beschrieben, worin mindestens 50 Gew.-%, bevorzugt mindestens 70 Gew.-% und besonders bevorzugt mindestens 80 Gew.-% des teilchenförmigen anorganischen Füllstoffes (der vorzugsweise in Form der besagten Zerkleinerungsrückstände vorliegt) aus einem oder mehreren Metalloxiden besteht. Die Zusammensetzung des Füllstoffes wird dabei durch Röntgenfluoreszenzanalyse bestimmt.

Bevorzugt ist ein Granulat wie vorstehend beschrieben, worin der anorganische Füllstoff ausgewählt ist aus der Gruppe bestehend aus Glas, Quarz, Tonminerale, Feldspate, Silicate, Carbonate, Gesteinsmehle, Tonerde bzw. Tonerdehydrate, Oxide, Kohlenstoff, Carbide, Sulfate, dolomitische und magnesitische Materialien und deren Gemische, wobei es sich um synthetische oder natürliche Materialien handeln kann. Beispiele sind: Quarzpulver, Glimmer, Talkum, Asbest, Schiefermehl, Kaolin, Wollastonit, Kreidepulver, Dolomit, Magnesiumcarbonat, Gips, Schwerspat, Siliziumdioxid, Aluminiumoxid, Bentone, Kieselsäureaerosol Lithopone, Magnesiumoxid, Titandioxid, Russ, Graphit, Metalloxide, Glaspulver, Glaskugeln, Glasfasern, Zinksulfid, Zirkoniumoxid, Siliciumcarbid, Cristoballit oder deren Mischungen. Am meisten bevorzugt sind Aluminiumoxid, Magnesiumoxid und Siliziumdioxid und diese enthaltende Mischungen.

Bevorzugt ist ebenfalls ein Granulat wie vorstehend beschrieben, welches ein Metalloxid ausgewählt aus der Liste bestehend aus Na₂O, MgO, Al₂O₃, SiO₂, K₂O, CaO, Fe₂O₃, ZrO₂ und deren Mischungen umfasst oder daraus im wesentlichen oder vollständig besteht. Wegen ihrer geringen Reaktionsneigung, ihrer guten Verfügbarkeit und ihres geringen Preises werden MgO, Al₂O₃, CaO und SiO₂ besonders häufig in der Industrie verwendet und fallen deshalb besonders häufig als Abfallstoffe an. In der Feuerfestindustrie werden MgO und Al₂O₃ auf Grund Ihrer hohen Schmelzpunkte besonders häufig verwendet. SiO₂ schmilzt bereits bei etwa 1713°C und ist daher für einige Anwendungen im Feuerfestbereich ungeeignet. Es ist jedoch häufig in Abfallstoffen der Glasindustrie, insbesondere in deren Ofen- oder Pfannenausbruch und anderen Industrieabfällen enthalten. Besonders bevorzugt ist daher ein Granulat wie vorstehend beschrieben, welches ein Metalloxid ausgewählt aus der Liste bestehend aus MgO, Al₂O₃, CaO und SiO₂ und deren Mischungen umfasst oder daraus im wesentlichen oder vollständig besteht.

Al₂O₃ und MgO sind zur Wiederverwendung als Verschlackungsmittel und/oder Schlackenkonditionierer in der Feuerfestindustrie gut geeignet. Es sind häufig verwendete Materialien für Ofen- und Pfannenverkleidungen in der Feuerfestindustrie und sie fallen auch in anderen Industrien als Abfallstoffe an. Wegen ihrer vorteilhaften Eigenschaften wie zum Beispiel ihrer hohen Schmelzpunkte und ihrer Aufnahmefähigkeit für Schlackenbestandteile werden sie in der Feuerfestindustrie auch bevorzugt als Verschlackungsmittel und/oder Schlackenkonditionierer eingesetzt. An Verschlackungsmittel und Schlackenkonditionierer werden dabei keine hohen Anforderungen bezüglich der Reinheit gestellt. Eine Belastung eines der Wiederverwendung als Verschlackungsmittel und/oder Schlackenkonditionierer zugeführten Materials mit Schwermetallen ist schon deshalb in aller Regel unproblematisch, weil es ja gerade die Aufgabe von Verschlackungsmitteln und Schlackenkonditionierern ist, Schwermetalle und andere Verunreinigungen aus der Schmelze aufzunehmen, bzw. mit ihnen in Kontakt zu kommen (Schlackenkonditionierer und ihre Verwendung werden zum Beispiel in der US 6,514,312 beschrieben). Verunreinigungen mit organischen Materialien werden unter den Bedingungen, unter denen Verschlackungsmittel und Schlackenkonditionierer eingesetzt werden, in der Regel verbrannt oder pyrolysiert und Reststoffe werden gegebenenfalls durch die ohnehin vorhandenen Abgassysteme aufgefangen. Die Wiederverwendung von Al₂O₃-haltigen und MgO-haltigen Industrieabfällen als Verschlackungsmittel und/oder Schlackenkonditionierer in der Feuerfestindustrie ist daher besonders vorteilhaft.

Besonders bevorzugt ist daher ein erfindungsgemäßes Granulat, worin der anorganische Füllstoff Al₂O₃ umfasst oder daraus besteht und ebenfalls besonders bevorzugt ist ein erfindungsgemäßes Granulat, worin der anorganische Füllstoff MgO umfasst oder daraus besteht. Solche Granulate sind im Gegensatz zu den feinkörnigen Ausgangsstoffen (Füllstoffe; Zerkleinerungsrückstände von Pfannen- oder Ofenausbrüchen ) in der Industrie gut einsetzbar. Pfannen- oder Ofenausbrüche und insbesondere ihre Zerkleinerungsrückstände müssen daher nicht mit erheblichem Kostenaufwand entsorgt werden.

Das als Füllstoff besonders bevorzugte Al₂O₃ verleiht dem erfindungsgemäßen Granulat die zur Verwendung als Verschlackungsmittel notwendigen Eigenschaften in der Regel jedoch nur, wenn der Anteil an Al₂O₃ im Granulat genügend hoch ist. Die erfindungsgemäßen Granulate enthalten neben dem Füllstoff üblicherweise im Wesentlichen das organische Bindemittel, welches bei der Verwendung der Granulate als Verschlackungsmittel und/oder Schlackenkonditionierer in der Feuerfestindustrie in der Regel bis auf geringe Rückstände verbrannt und/oder zersetzt wird. Daher ist es in der Regel ausreichend, wenn der Anteil an Al₂O₃ im Füllstoff mindestens 80 Gew.-% Al₂O₃ beträgt, bezogen auf die Gesamtmenge des Füllstoffs. Bevorzugt ist daher ein erfindungsgemäßes Granulat, wie vorstehend beschrieben, worin der anorganische Füllstoff mindestens 80 Gew.-% Al₂O₃ umfasst, bezogen auf die Gesamtmenge des Füllstoffs.

Für besondere Anwendungen kann es jedoch erforderlich sein, dem Granulat neben dem Füllstoff noch andere Beimengungen zuzufügen, die unter den Einsatzbedingungen als Verschlackungsmittel und/oder Schlackenkonditionierer nicht zersetzt und entfernt werden. Bei diesen Beimengungen kann es sich zum Beispiel um zusätzliche anorganische Bindemittel, Zuschlagsstoffe und/oder um Flussmittel handeln. Letztere können zum Beispiel in Form von Erdalkalimetallionen oder anderen Metallionen als Bestandteil des Phenolharzes oder als zusätzlicher Bestandteil eingebracht werden. Um in solchen Fällen die Eignung des Granulats als Verschlackungsmittel und/oder Schlackenkonditionierer zu erhalten muss unter Umständen der Anteil des Al₂O₃ so hoch sein, dass er mindestens 80 Gew.-% Al₂O₃ beträgt, bezogen auf die Gesamtmenge des Granulats. Ganz besonders bevorzugt ist daher ein erfindungsgemäßes Granulat, wie vorstehend beschrieben, worin das Granulat mindestens 80 Gew.-% Al₂O₃ umfasst, bezogen auf die Gesamtmenge des Granulats.

Pfannen- und Ofenausbruch ist häufig eine Al₂O₃-haltige Mischung aus verschiedenen Oxiden und geringen Anteilen von Metallen und Schwermetallen, wobei der Al₂O₃-Anteil häufig über 50 Gew-% beträgt. Häufig enthalten Industrieabfälle wie Pfannen- und Ofenausbruch jedoch einen Anteil an Al₂O₃ der weniger als 80 Gew.-% Al₂O₃ beträgt. Solche Industrieabfälle werden dann vorteilhaft mit soviel zusätzlichem Al₂O₃ gemischt, dass der Anteil an Al₂O₃ in der Mischung über 80 Gew.-% beträgt. Ganz besonders bevorzugt ist deshalb ein Granulat, worin der Füllstoff eine Mischung aus (i) Zerkleinerungsrückständen von Al₂O₃-haltigem Pfannen- oder Ofenausbruch und (ii) zusätzlichem Al₂O₃ umfasst.

Kalium- und Natriumsalze werden als Flussmittel für Stahlschmelzen eingesetzt. Granulate mit hohem Kalium- und/oder Natriumanteil können deshalb bei der Stahlherstellung oder Stahlschmelze gleichzeitig als Verschlackungsmittel, Schlackenkonditionierer und Flussmittel wirken. Weiter bevorzugt ist ein Granulat wie vorstehend beschrieben und insbesondere wie vorstehend als bevorzugt bezeichnet, worin das Granulat Kaliumionen und/oder Natriumionen enthält.

Besonders bevorzugt ist ein Granulat wie vorstehend beschrieben, worin der Füllstoff einen oder mehrere der anorganischen Abfallstoffe ausgewählt aus der Gruppe bestehend aus Korundabfälle, sonstige Al₂O₃ enthaltende Abfallprodukte, Filterstäube, gegebenenfalls zerkleinerte Gießereiabfälle (wie insbesondere zerkleinerten Pfannen- oder Ofenausbruch), Putzerei- und Strahlsandrückstände, Schlacken, Feinsand, Gichtgasstaub, oder deren Mischungen umfasst oder daraus besteht. Die genannten Materialien liegen dabei gegebenenfalls in zerkleinerter Form und insbesondere als Zerkleinerungsrückstände vor. Bevorzugt als Füllstoff ist ein pulverförmiger Feststoff (Zerkleinerungsrückstand), der als mineralische Hauptbestandteile Al₂O₃ und SiO₂ enthält und dessen Partikel eine durchschnittliche Teilchengröße von weniger als 20 µm, in der Regel von weniger als 5 µm besitzen. Ein solcher Füllstoff kann neben den mineralischen Anteilen auch Kohlenstoff enthalten. Bevorzugt als Füllstoff ist auch ein pulverförmiger Feststoff (Zerkleinerungsrückstand), der als Hauptbestandteil Al₂O₃ enthält. Ein solcher Füllstoff enthält vorzugsweise mehr als 80 Gew.-%, häufig mehr als 90 Gew.-% Al₂O₃ und seine Partikel haben vorzugsweise eine durchschnittliche Teilchengröße von weniger als 20 µm, in der Regel von weniger als 5 µm. Bevorzugt als Füllstoff ist auch ein pulverförmiger Feststoff (Zerkleinerungsrückstand), der als mineralischen Hauptbestandteil MgO enthält und dessen Partikel eine durchschnittliche Teilchengröße von weniger als 50 µm, in der Regel von weniger als 10 µm besitzen. Ein solcher Füllstoff enthält vorzugsweise neben den mineralischen Anteilen auch Kohlenstoff.

Besonders bevorzugt ist ein Granulat wie vorstehend beschrieben, worin der Füllstoff einen oder mehrere anorganische Abfallstoffe ausgewählt aus der Gruppe bestehend aus Mineralstäuben sowie Pfannen- oder Ofenausbruch (gegebenenfalls in zerkleinerter Form und insbesondere in Form von Zerkleinerungsrückständen), umfasst oder daraus besteht.

Solche als Füllstoffe einsetzbaren Materialien fallen in großen Mengen in der Feuerfestindustrie an und eigenen sich aufgrund ihrer Zusammensetzung zum wiederholten Einsatz in der Feuerfestindustrie. Eine hohe Anzahl an Partikeln mit Durchmessern unterhalb von 1 mm beziehungsweise 0,01 mm (Staub, Feinstaub) macht sie jedoch häufig zur Verwendung als Verschlackungsmittel, Schlackenkonditionierer oder Flussmittel ungeeignet. Die Granulate gemäß der vorliegenden Erfindung sind jedoch vorzugsweise für solche Verwendungen geeignet.

Bevorzugt ist ebenfalls ein Granulat wie vorstehend beschrieben, insbesondere wie vorstehend als bevorzugt bezeichnet, worin mindestens 20 Gew.-%, bevorzugt mindestens 40 Gew.-% und besonders bevorzugt mindestens 50 Gew.-% der Teilchen des teilchenförmigen anorganischen Füllstoffes eine Teilchengröße von kleiner als 1 mm, bevorzugt von kleiner als 0,1 mm besitzen.

Von besonderer Bedeutung ist ein erfindungsgemäßes Granulat wie vorstehend beschrieben, insbesondere wie vorstehend als besonders bevorzugt bezeichnet, worin mindestens 5 Gew.-%, bevorzugt mindestens 10 Gew.-%, besonders bevorzugt mindestens 20 Gew.-% und ganz besonders bevorzugt mindestens 50 Gew.-% der Teilchen des teilchenförmigen anorganischen Füllstoffes eine Teilchengröße von kleiner als 0,01 mm besitzen. Solche Teilchengrößen entsprechen den Teilchengrößen von Feinstäuben und die entsprechenden Teilchen sind im nicht-gebundenen Zustand als lungengängige Teilchen besonders gesundheitsgefährdend. Besonders relevant ist ein Granulat wie vorstehend beschrieben, worin mindestens 20 Gew.-%, bevorzugt mindestens 40 Gew.-% und besonders bevorzugt mindestens 50 Gew.-% der Teilchen des Füllstoffes eine Teilchengröße von kleiner als 5 µm besitzen. Die Korngrößenanalyse der Füllstoffpartikel wird dabei mittels rasterelektronenmikroskopischer Analyse (REM) durchgeführt. Es werden dazu jeweils Materialproben enthaltend zwischen 200 und 300 Partikel vermessen. Es wird jeweils der größte sichtbare Durchmesser eines jeden Partikels bestimmt.

Alkalische Füllstoffe bringen besondere Probleme mit sich, weil sie mit einer großen Anzahl von Bindemitteln reagieren, diese unbrauchbar machen und so ein Binden der Füllstoffpartikel verhindern. Die vorliegende Erfindung betrifft jedoch vorteilhafterweise auch stabile lagerfähige und rieselfähige Granulate, die alkalische Füllstoffe enthalten. Besonders relevant ist insoweit ein erfindungsgemäßes Granulat wie vorstehend beschrieben, insbesondere wie vorstehend als bevorzugt bezeichnet, wobei der pH-Wert einer zehnprozentigen wässrigen Aufschlämmung des Füllstoffs alkalisch ist, gemessen nach DIN EN ISO 787-09. Weiter bevorzugt ist ein Granulat wie vorstehend beschrieben, insbesondere wie vorstehend als bevorzugt bezeichnet, worin der Füllstoff hygroskopisch ist. Solche Granulate auf Basis von feinteiligen anorganischen Füllstoffen sind ebenfalls häufig schwer zugänglich, da die hygroskopischen Füllstoffe Wasser und andere polare Bestandteile des Bindemittels aufsaugen und somit eine gleichmäßige Verteilung und Haftung des Bindemittels verhindern.

Phenolharze und insbesondere Phenol-Formaldehydharze sind Kunstharze, die durch Kondensation von Phenolen mit Aldehyd und gegebenenfalls durch Derivatisierung der dabei resultierenden Kondensate gewonnen werden. Phenol-Formaldehydharze werden üblicherweise, in Abhängigkeit von den Mengenverhältnissen der Edukte (Phenolkomponente und Aldehyd (insbesondere Formaldehyd)), den Reaktionsbedingungen und den eingesetzten Katalysatoren in zwei Produktklassen eingeteilt, die Novolake (Phenolnovolake) und Resole:

Novolake sind dabei lösliche, schmelzbare, nicht selbsthärtende und lagerstabile Oligomere mit Molmassen im Bereich von ca. 500 - 5000 g/mol. Sie fallen regelmäßig bei der Kondensation von Aldehyden, insbesondere Formaldehyd und Phenolkomponente im Mol-Verhältnis von ca. 1 : 1,25 - 2 in Gegenwart saurer Katalysatoren an. Novolake sind in der Regel methylolgruppenfrei, und ihre aromatischen Ringe sind über Methylen-Brücken verknüpft. Novolake können durch reaktive Vernetzer (Härtungsmittel) (z. B. Hexamethylentetramin, Formaldehyd, Isocyanate wie Methylendidiphenylisocyanat, Epoxide etc.) bei erhöhter Temperatur unter Vernetzung gehärtet werden. Novolake sind üblicherweise wasserunlöslich.

Resole sind Gemische von Hydroxymethylphenolen, die über Methylen- und Methlyenetherbrücken verknüpft sind. Sie werden regelmäßig durch eine alkalisch katalysierte Kondensationsreaktion mit molarem Überschuss des Aldehyds hergestellt. Dabei wird die Kondensation bei einem gewissen Polymerisationsgrad abgebrochen. Über ihre reaktiven Methylol-Gruppen sind Resole selbsthärtend. Bei geringerem Kondensationsgrad sind Resole flüssig, besitzen dabei unterschiedliche Viskositäten und sind in der Regel löslich in Wasser und Alkoholen. Resole können unter Einfluss von Wärme oder Katalysatoren in hoch vernetzte Strukturen (Resite) überführt werden. Sie sind dann fest. Bei der Verwendung von Katalysatoren ist eine Erwärmung des Resols zur Härtung in der Regel nicht notwendig.

Eine besondere Klasse der Phenol-Formaldehydharze sind die Benzyletherharze. Benzyletherharze sind Kondensationsprodukte aus einer Phenolkomponente und Formaldehyd, die unter katalytischem Einfluss von zweiwertigen Metallionen gewonnen werden, vergleiche hierzu US 3,485,797. Benzyletherharze sind regelmäßig wasserunlöslich, aber löslich in Alkoholen und anderen organischen Lösungsmitteln.

Bevorzugt ist ein Granulat wie vorstehend beschrieben, worin das gehärtete Phenolharz-haltige Bindemittel herstellbar ist durch Härten eines flüssigen Phenolharzes. Bevorzugt ist außerdem ein Granulat wie vorstehend beschrieben, worin das gehärtete Phenolharz-haltige Bindemittel herstellbar ist durch Härten eines (in weiten Bereichen) mit Wasser mischbaren und/oder wasserlöslichen Phenolharzes. Bevorzugt ist hierbei ein Phenolharz, dessen Härtung auch in Gegenwart von größeren Mengen Wasser in der Härtung nicht oder nicht in erheblichem Maße beeinträchtigt wird. Insbesondere sind Phenolharze bevorzugt, die auch in einer 50 Gew.-% Wasser enthaltenden Lösung, bevorzugt auch in einer 80 Gew.-% Wasser enthaltenden Lösung, bezogen auf die Gesamtmenge der Lösung, noch härten. Weiterhin bevorzugt ist ein Granulat wie vorstehend beschrieben, insbesondere wie vorstehend als bevorzugt bezeichnet, worin das gehärtete Phenolharz-haltige Bindemittel herstellbar ist durch Härten eines durch Ester organischer Säuren härtbaren Phenolharzes, insbesondere eines durch Ester organischer Säuren härtbaren Resols. Solche Phenolharze und zum Härten geeignete Ester sind zum Beispiel beschrieben in der EP 0 085 512 und den darin genannten Dokumenten EPA 0 027 333, GB 2 059 972 A und der JP-A 130627/1975. Besonders bevorzugt ist ein Granulat wie vorstehend beschrieben und insbesondere wie vorstehend als bevorzugt bezeichnet, worin das gehärtete Phenolharz-haltige Bindemittel herstellbar ist durch Härten eines flüssigen, bevorzugt eines flüssigen und wasserverträglichen und besonders bevorzugt ein flüssigen, wasserverträglichen und durch Ester organischer Säuren härtbaren Phenolharzes, insbesondere eines Resols. Die vorstehend genannten gehärteten Phenolharz-haltigen Bindemittel können auch herstellbar sein durch Härten von härtbaren Mischungen umfassend die vorstehend genannten härtbaren Phenolharze. Am meisten bevorzugt ist ein Granulat wie vorstehend beschrieben, worin das gehärtete Phenolharz-haltige Bindemittel herstellbar ist durch Härten eines flüssigen, bevorzugt eines flüssigen und wasserlöslichen und besonders bevorzugt eines flüssigen, wasserlöslichen und durch Ester organischer Säuren härtbaren Phenolharzes oder durch Härten einer Mischung umfassend ein solches härtbares Phenolharz. Die Härtung eines solchen Phenolharzes bzw. eines solchen Gemisches wurde ebenfalls in der EP 0 085 512 beschrieben.

Bevorzugt ist ferner ein Granulat wie vorstehend beschrieben, worin das gehärtete Phenolharz-haltige Bindemittel ein gehärtetes Phenol-Formaldehyd-Harz, insbesondere ein gehärtetes Phenol-Formaldehyd-Resol, umfasst oder daraus besteht.

Resole werden bei ihrer Herstellung in wasserhaltigen Lösungen oder Mischungen erhalten und können auch in Gegenwart größerer Mengen von Feuchtigkeit und ohne Zufuhr von Wärme gehärtet werden. Ferner können Sie im basischen Milieu hergestellt und gehärtet werden und sind deshalb geeignet, auch basische Füllstoffe zu binden. Besonders bevorzugt ist daher ein Granulat wie vorstehend beschrieben, besonders bevorzugt wie vorstehend als bevorzugt bezeichnet, worin das gehärtete Phenolharz-haltige Bindemittel ein gehärtetes Resol umfasst oder daraus besteht.

Bevorzugt ist weiter ein Granulat wie vorstehend beschrieben, insbesondere vorstehend als bevorzugt bezeichnet, worin das gehärtete Phenolharz-haltige Bindemittel ein gehärtetes Phenol-Formaldehyd-Harz, insbesondere ein Phenol-Formaldehyd-Resol, mit einem molaren Verhältnis von Formaldehyd zu Phenol im Bereich von 1,2 : 1 bis 2,6 : 1 umfasst oder daraus besteht.

Solche molaren Verhältnisse von Formaldehyd zu Phenol verleihen dem Granulat eine hohe Festigkeit und erlauben es gleichzeitig eine geringe Menge an Phenol-Formaldehyd-Harz-haltigem Bindemittel im Verhältnis zur eingesetzten Menge an Füllstoff zu verwenden. Dies gilt insbesondere bei der Verwendung von Resolen.

Ebenfalls bevorzugt ist ein Granulat wie vorstehend beschrieben, worin das gehärtete Phenolharz-haltige Bindemittel Harnstoff umfasst oder herstellbar ist durch Härten eines Phenolharzes, das Harnstoff umfasst oder das unter Verwendung von Harnstoff hergestellt wurde. Besonders bevorzugt ist ein Granulat wie vorstehend beschrieben, insbesondere wie vorstehend als bevorzugt bezeichnet, worin das gehärtete Phenolharz-haltige Bindemittel ein gehärtetes Harnstoff-Phenol-Formaldehyd-Harz umfasst oder daraus besteht. Harnstoffhaltige Phenolharz-haltige Bindemittel verleihen dem gebundenen Füllstoff häufig höhere Festigkeiten als harnstofffreie Ausführungsform. Auch kann Harnstoff in einem gewissen Ausmaß zur Einstellung oder Pufferung des pH-Wertes des Bindemittels dienen. Bevorzugt ist ein Granulat wie vorstehend beschrieben, worin das gehärtete Phenolharz-haltige Bindemittel 5 Gew.-% oder weniger Harnstoff bezogen auf die Gesamtmenge des gehärteten Phenolharz-haltigen Bindemittels enthält.

Jedoch sind harnstoffhaltige Bindemittel häufig in der Eisen- und Stahlgießerei nicht erwünscht, weil sie zu einer Graufärbung oder zur Bildung von "pinholes" bei Eisen und Stahl führen können. Stickstoff kann auch mit anderen Metallen, wie zum Beispiel Titan reagieren. Die Eignung harnstoffhaitiger Bindemittel für die jeweilige Anwendung muss daher von Fall zu Fall geprüft werden.

Ebenfalls bevorzugt ist ein erfindungsgemäßes Granulat wie vorstehend beschrieben, worin das Granulat eine mittlere Teilchengröße von mindestens 2 mm, bevorzugt von mindestens 3 mm hat. Ebenfalls bevorzugt ist ein Granulat wie vorstehend beschrieben, worin das Granulat einen d₅₀-Wert von 5 mm hat. Weiter bevorzugt ist ein Granulat wie vorstehend beschrieben und insbesondere wie vorstehend als bevorzugt bezeichnet, worin das Granulat einen d₅₀-Wert von 5 mm, einen d₁₀-Wert von 2 mm und einen d₉₀-Wert von 8 mm hat. Die d₅₀, d₉₀ und der d₁₀-Werte der Partikelgröße werden durch REM-Analysen bestimmt.

Wie vorstehend beschrieben, führen Partikel mit kleinen Partikeldurchmessern zu gesundheitlichen Beeinträchtigungen. Teilchen mit einer Teilchengröße von unter 1 mm werden bei der Verwendung der Granulate als Verschlackungsmittel, Schlackenkonditionierer oder Flussmittel durch die im Schmelzofen vorhandenen starken Gasströme leicht ausgetragen und können so zu einer Veränderung der Zusammensetzung des Granulats führen. Letzteres ist insbesondere der Fall, wenn die feinkörnigen Anteile und die grobkörnigen Anteile des Granulats eine unterschiedliche chemische Zusammensetzung besitzen. Wenn sich die Zusammensetzung des Granulats während der Verwendung jedoch ändert, so ist eine kontrollierte zielgerichtete Verwendung häufig nicht mehr möglich. Weiterhin können sich Teilchen mit einer Teilchengröße von unter 1mm bei der Lagerung oder beim Transport von Größeren Teilchen entmischen und somit eine inhomogene Zusammensetzung des Granulats verursachen. Wenn Granulate mit größeren Partikeldurchmessern verwendet werden, die organische Bindemittel enthalten, werden die Bindemittel beim Auftragen auf die Schmelze nicht durch die starken Gasströme ausgetragen. Wenn die Bindemittel in der Hitze verbrennen oder pyrolysieren, verkleben die darin enthaltenen Füllstoffteilchen mit der Schmelze, der Schlacke oder mit anderen Bestandteilen des Granulats, so dass nur sehr geringe Anteile des im Granulat enthaltenen Füllstoffs ausgetragen werden.

Besonders bevorzugt ist daher ein Granulat wie vorstehend beschrieben, insbesondere wie vorstehend als bevorzugt bezeichnet, worin höchstens 5 Gew.-%, bevorzugt höchstens 2 Gew.-% und besonders bevorzugt höchstens 1 % der Teilchen des Granulats eine Teilchengröße von unter 1 mm besitzen, bezogen auf die Gesamtmenge des Granulats. Solche geringen Anteile an Teilchen mit kleinen Durchmessern ermöglichen die weitere Verwendung der Granulate ohne schädliche Staubentwicklung, ohne störende Änderung der Zusammensetzung in Gasströmen und ohne störende Entmischung von verschieden großen Teilchen voneinander.

Bevorzugt ist außerdem ein Granulat wie vorstehend beschrieben, worin das Granulat Wasser umfasst. Wasser kann in dem erfindungsgemäßen Granulat dazu dienen, noch verbleibende Anteile an Partikel mit besonders geringer Teilchengröße zu binden und eine Staubentwicklung zu vermeiden. Ferner enthalten viele Füllstoffe, die als anorganische Abfallstoffe anfallen, Restgehalte an Wasser aus der industriellen Verarbeitung oder aus Regenwasser, das bei der Lagerung hinzugetreten ist. Solche Füllstoffe können im vorliegenden Granulat mitsamt ihrem Wasseranteil enthalten sein. Dies macht eine aufwendige Trocknung der Füllstoffe unnötig.

Ganz besonders bevorzugt ist ein Granulat wie vorstehend beschrieben, insbesondere wie vorstehend als bevorzugt bezeichnet, wobei das Granulat zur Verwendung als Verschlackungsmittel. Schlackenkonditionierer und/oder Flussmittel geeignet ist.

Gegenstand dieser Erfindung ist auch ein Verfahren zur Herstellung eines erfindungsgemäßen Granulats wie vorstehend beschrieben, mit den folgenden Schritten:
(1) Bereitstellen oder Herstellen einer Mischung umfassend teilchenförmigen anorganischen Füllstoff, härtbares Phenolharz-haltiges Bindemittel, Härtungsmittel, gegebenenfalls Wasser und gegebenenfalls weitere Komponenten,
(2) Härten lassen der Mischung, so dass das gehärtete Phenolharz-haltige Bindemittel Füllstoffpartikel bindet,
(3) Granulieren der zumindest teilweise gehärteten Mischung.

Ist das Bindemittel im Wesentlichen gehärtet, so wird ein (geringfügiges) Nachhärten des Bindemittels nicht mehr zum Aneinanderhaften der Partikel des Granulats führen. Das gehärtete Phenolharz wird dann auch bei Temperaturänderungen chemisch nicht mehr verändert. Ein solches Verfahren macht daher auf einfache und preiswerte Weise fließfähige und lagerfähige Granulate zugänglich, deren Partikel auch bei längerer Lagerzeit oder der Einwirkung von moderaten Temperaturen oder von Temperaturschwankungen nicht aneinander haften oder miteinander verbunden werden. In der einfachsten Ausführungsform werden alle drei Schritte (1), (2) und (3) in einem Mischer durchgeführt, wobei der Mischer während der Schritte (1), (2) und (3) durchgehend in Betrieb ist. Dabei härtet die Mischung, die durch Mischen der Komponenten erhalten wird, innerhalb kurzer Zeit selbstständig. Durch die fortgesetzte mechanische Bewegung des Mischers während des Härtens werden sich bildende größere Aggregate zerkleinert (granuliert) und kleinere Partikel oder Granulatteilchen werden zusammengeführt und vereinigen sich durch Zusammenkleben und anschließendes Härten zu Granulatpartikeln. Die Größe der Granulatpartikel wird dabei beeinflusst von der Art und dem Wassergehalt des Füllstoffs, von der Art des Bindemittels und der Art des Rührers und seiner Rührgeschwindigkeit. Der Fachmann wird durch einfache Vorversuche bestimmen, welche Betriebsparameter zu den gewünschten Ergebnissen führen. Bevorzugt ist ein Verfahren wie vorstehend beschrieben, worin während der Schritte (1), (2) und (3) die Ausgangsstoffe, Zwischenprodukte und/oder Produkte zumindest zeitweise mechanisch bewegt werden. Besonders bevorzugt ist ein Verfahren wie vorstehend beschrieben, worin während des gesamten Verfahrens die Ausgangsstoffe, Zwischenprodukte und/oder Produkte fortwährend in einem Mischer mechanisch bewegt werden. Besonders bevorzugt ist auch ein Verfahren wie vorstehend beschrieben, wobei nach Beendigung der Schritte (1), (2) und (3) das Granulat nachhärtet.

Die Zugabe von Wasser zum Füllstoff kann zur Einstellung der Fließfähigkeit des anorganischen Füllstoffs dienen oder verhindern, dass das härtbare Phenolharz vollständig vom Füllstoff absorbiert wird und so eine Härtung der Mischung verhindert wird. Die Qualität der Granulate, insbesondere ihre Festigkeit, ist insbesondere bei hygroskopischen und feuchten Materialien von der zugefügten Menge an Wasser zum Füllstoff abhängig. Bei Zugabe der optimalen Menge an Wasser kann auch die notwendige Menge an härtbarem Phenolharz-haltigem Bindemittel reduziert werden. Die notwendige Menge an Wasser variiert in Abhängigkeit von der Art, der Zusammensetzung, dem ursprünglichem Wassergehalt, der Korngröße und weiteren Parametern des Füllstoffs Der Fachmann wird durch einfache Vorversuche die geeignete oder optimale Menge Wasser im Verhältnis zu den anderen Bestandteilen bestimmen; Anwendung finden kann insoweit eine Bestimmung des Wassergehaltes in Anlehnung an VDG-Merkblatt P32 (April 1997).

Die Zugabe von Wasser zum einzusetzenden härtbaren Phenolharz kann zur Einstellung der Viskosität des härtbaren Phenolharzes dienen. Die Viskosität des härtbaren Phenolharzes muss so eingestellt werden, dass eine gute Mischbarkeit des härtbaren Phenolharzes mit dem Füllstoff erzielt wird. Der Fachmann wird durch Vorversuche eine geeignete Viskosität bestimmen.

Wegen der Wasser- und Basenverträglichkeit der Resole ist ein Verfahren wie vorstehend beschrieben bevorzugt, worin das härtbare Phenolharz-haltige Bindemittel ein Resol umfasst oder daraus besteht.

Bevorzugt ist ein erfindungsgemäßes Verfahren wie vorstehend beschrieben, wobei der teilchenförmige anorganische Füllstoff Zerkleinerungsrückstände von Pfannen- oder Ofenausbruch enthält. Dabei ist wiederum besonders bevorzugt ein erfindungsgemäßes Verfahren wie vorstehend beschrieben, wobei der teilchenförmige anorganische Füllstoff zu mindestens 40 Gew.-%, bezogen auf das Gesamtgewicht des teilchenförmigen anorganischen Füllstoffs, aus Zerkleinerungsrückständen besteht, insbesondere aus Zerkleinerungsrückständen von Pfannen- oder Ofenausbruch, die durch Zerkleinern mit einem Backenbrecher oder durch Mahlen entstanden sind.

Besonders bevorzugt ist ein erfindungsgemäßes Verfahren wie vorstehend beschrieben, worin die Mischung umfassend teilchenförmigen anorganischen Füllstoff, härtbares Phenolharz-haltiges Bindemittel, Härtungsmittel, gegebenenfalls Wasser und gegebenenfalls weitere Komponenten hergestellt wird durch ein Verfahren mit den folgenden Schritten:
i. Bereitstellen von mindestens je einem Füllstoff, härtbarem Phenolharz-haltigem Bindemittel und Härtungsmittel, gegebenenfalls Wasser und gegebenenfalls einer oder mehreren weiteren Komponenten,
ii. Zusammengeben von Füllstoff, härtbarem Phenolharz-haltigem Bindemittel, Härtungsmittel, gegebenenfalls Wasser und gegebenenfalls der oder den weiteren Komponenten, wobei das Zusammengeben von Füllstoff, härtbarem Phenolharz und Härtungsmittel erfolgt, in dem zunächst Füllstoff und härtbares Phenolharz-haltiges Bindemittel miteinander vermischt werden und erst anschließend das Härtungsmittel zugegeben wird, oder zunächst Füllstoff und Härtungsmittel miteinander vermischt werden und erst anschließend das härtbare Phenolharz-haltiges Bindemittel zugegeben wird,
iii. Mischen der zusammengegebenen Komponenten.

Das Mischen von härtbarem Phenolharz oder Härtungsmittel mit dem Füllstoff, bevor die jeweils andere Komponente zugegeben wird, dient dazu, die innige Vermischung von härtbarem Phenolharz-haltigem Bindemittel und Härtungsmittel ohne Vorhandensein von Füllstoff zu vermeiden, da in einem solchen Fall zumindest ein Teil des härtbaren Phenolharzes ohne Kontakt zum Füllstoff aushärten würde. Ein Teil des härtbaren Phenolharzes würde deshalb als Bindemittel verloren gehen.

Weiter bevorzugt ist ein erfindungsgemäßes Verfahren wie vorstehend beschrieben, insbesondere wie vorstehend als bevorzugt bezeichnet, worin die Mischung umfassend teilchenförmigen anorganischen Füllstoff, härtbares Phenolharz-haltiges Bindemittel, Härtungsmittel, gegebenenfalls Wasser und gegebenenfalls weitere Komponenten hergestellt wird durch ein Verfahren mit den folgenden Schritten in der angegebenen Reihenfolge:
i. Bereitstellen des Füllstoffs oder der Füllstoffe,
ii. sofern Wasser zuzugeben ist, Zugeben des Wassers und anschließend Mischen,
iii. Zugeben des Härtungsmittels zum Füllstoff bzw. zu den Füllstoffen bzw. zu der Mischung umfassend Füllstoff bzw. Füllstoffe und Wasser und anschließend Mischen,
iv. sofern eine oder mehrere weitere Komponenten zuzugeben sind, Zugeben der einzelnen, weiterer oder sämtlicher Komponenten und anschließend Mischen,
v. Zugeben des härtbaren Phenolharz-haltigen Bindemittels und anschließend Mischen.

Die Zugabe des Wassers zu dem Füllstoff vor Zugabe der anderen Bestandteile führt in der Regel zu den besten Ergebnissen bezüglich der Festigkeit der Partikel des Granulat und erlaubt eine geringe Einsatzmenge an härtbarem Phenolharz-haltigem Bindemittel. Darüber hinaus würde eine Wasserzugabe zu einem späteren Zeitpunkt im erfindungsgemäßen Verfahren verstärkt zur Schollenbildung im Mischer führen. Das Granulat rollt dann im Einzelfall nicht mehr sauber ab, pappt an und erhöht den Reinigungsaufwand.

Die Reihenfolge der Zugabe von härtbarem Phenolharz-haltigem Bindemittel und Härter kann in diesem Verfahren auch vertauscht werden.

Besonders bevorzugt ist ein erfindungsgemäßes Verfahren wie vorstehend beschrieben, insbesondere wie vorstehend als bevorzugt bezeichnet, worin mindestens ein teilchenförmiger anorganischer Füllstoff, wie vorstehend beschrieben, verwendet wird. Ebenfalls bevorzugt ist ein Verfahren wie vorstehend beschrieben, worin der bereitgestellte teilchenförmige anorganische Füllstoff pulverförmig ist.

Weiterhin bevorzugt ist ein erfindungsgemäßes Verfahren wie vorstehend beschrieben, insbesondere wie vorstehend als bevorzugt bezeichnet, worin das härtbare Phenolharz-haltige Bindemittel ein Phenolharz wie vorstehend beschrieben umfasst oder daraus besteht. Bevorzugt ist ferner ein erfindungsgemäßes Verfahren wie vorstehend beschrieben, worin das härtbare Phenolharz-haltige Bindemittel ein Phenol-Formaldehyd-Harz, insbesondere ein Phenol-Formaldehyd-Resol, umfasst oder daraus besteht.

Bevorzugt ist ein erfindungsgemäßes Verfahren wie vorstehend beschrieben, worin das härtbare Phenolharz-haltige Bindemittel ein flüssiges Phenolharz umfasst oder daraus besteht. Bevorzugt ist außerdem ein erfindungsgemäßes Verfahren wie vorstehend beschrieben, worin das härtbare Phenolharz-haltige Bindemittel ein wasserverträgliches Phenolharz umfasst oder daraus besteht. Besonders bevorzugt ist ein erfindungsgemäßes Verfahren wie vorstehend beschrieben, worin das härtbare Phenolharz-haltige Bindemittel ein wasserlösliches Phenolharz umfasst oder daraus besteht. Weiterhin bevorzugt ist ein erfindungsgemäßes Verfahren wie vorstehend beschrieben, insbesondere wie vorstehend als bevorzugt bezeichnet, worin das härtbare Phenolharz-haltige Bindemittel ein durch Ester organischer Säuren härtbares Phenolharz, insbesondere ein Resol, umfasst oder daraus besteht. Besonders bevorzugt ist ein erfindungsgemäßes Verfahren wie vorstehend beschrieben und insbesondere wie vorstehend als bevorzugt bezeichnet, worin das härtbare Phenolharz-haltige Bindemittel ein flüssiges, bevorzugt ein flüssiges und wasserverträgliches oder ein flüssiges und wasserlösliches und besonders bevorzugt ein flüssiges, wasserverträgliches und wasserlösliches und am meisten bevorzugt ein flüssiges, wasserverträgliches, wasserlösliches und durch Ester organischer Säuren härtbares Phenolharz, insbesondere ein Resol, umfasst oder daraus besteht. Ebenfalls besonders bevorzugt ist ein erfindungsgemäßes Verfahren wie vorstehend beschrieben, worin das härtbare Phenolharz-haltige Bindemittel ein flüssiges, wasserlösliches und durch Ester organischer Säuren härtbares Phenolharz, insbesondere ein Resol, umfasst oder daraus besteht.

Ebenfalls bevorzugt ist ein erfindungsgemäßes Verfahren wie vorstehend beschrieben, worin das härtbare Phenolharz-haltige Bindemittel eines oder mehrere Silane umfasst. Silane erhöhen die Festigkeit der Granulate.

Besonders bevorzugt ist ein erfindungsgemäßes Verfahren wie vorstehend beschrieben, insbesondere wie vorstehend als bevorzugt bezeichnet, worin das härtbare Phenolharz-haltige Bindemittel aus einer wässrigen Lösung eines Kaliumhydroxid-haltigen und/oder Natriumhydroxid-haltigen alkalischen Phenol-Formaldehyd-Resols mit folgenden Eigenschaften besteht:
a) ein Feststoffgehalt von 20 bis 75 Gew.-%, vorzugsweise 50 bis 75 Gew.-%,
b) ein molekulares Gewichtsmittel (M_{w}) von 500 bis 2000,
c) ein Molverhältnis von Formaldehyd zu Phenol von 1,2 zu 1 bis 2,6 zu 1, und
d) ein Verhältnis der Gesamtsumme der Moläquivalente von KOH undNaOH zu Phenol von 0,5 zu 1 bis 1,5 zu 1,
und worin das Härtungsmittel mindestens einen aktiven Ester in einer Menge von 10 bis 100 Gew.-%, bezogen auf das Gewicht der wässrigen Lösung des Kaliumhydroxid-haltigen und/oder Natriumhydroxid-haltigen alkalischen Phenol-Formaldehyd-Resols enthält oder daraus besteht. Aktive Ester sind Ester, die die Härtung des Phenolharzes beschleunigen. Der Feststoffgehalt wird gemäß DIN EN 16916-02E bestimmt, d. h. durch Trocknung des Phenolharzes bei 135°C unter Normaldruck und anschließendes Auswiegen des Rückstandes

Ähnliche härtbare Phenolharz-haltige Bindemittel sind in der EP 0 085 512 A1 beschrieben worden. Sie verleihen dem Produkt eine hohe Festigkeit und erlauben gleichzeitig die Verwendung nur geringer Mengen Bindemittel im Verhältnis zum gebundenen Füllstoff. Sie sind außerdem stabil gegenüber alkalischen Füllstoffen und werden weder im ungehärteten noch im gehärteten Zustand durch alkalische Füllstoffe zersetzt oder in ihrer Fähigkeit zur Bindung des Feststoffes wesentlich gemindert.

Bevorzugt ist ebenfalls ein Verfahren wie vorstehend beschrieben, insbesondere wie vorstehend als bevorzugt bezeichnet, worin die Menge des eingesetzten härtbaren Phenolharz-haltigen Bindemittels im Bereich von 0,1 bis 40 Gew.-%, bevorzugt 5 bis 30 Gew.-%, besonders bevorzugt 5 bis 20 Gew.-%, ganz besonders bevorzugt von 5 bis 18 Gew.-% und am meisten bevorzugt von 5 bis 16 Gew.-% liegt, bezogen auf das Gewicht des eingesetzten Füllstoffs.

Die notwendige Menge des härtbaren Phenolharz-haltigen Bindemittels ist stark abhängig von der Art des Füllstoffes aber auch von der Art des härtbaren Phenolharz-haltigen Bindemittels. Wenn mehr als 40% Bindemittel hinzugefügt werden, so ist das Kosten-Nutzen-Verhältnis in der Regel ungünstig. Weniger als 0,1 Gew.-% Bindemittel haben in der Regel einen zu geringen bindenden Effekt.

Weiterhin bevorzugt ist ein Verfahren wie vorstehend beschrieben, insbesondere wie vorstehend als bevorzugt bezeichnet, worin die Menge des eingesetzten Härtungsmittels im Bereich von 10 bis 100 Gew.-% liegt, bezogen auf das Gewicht des eingesetzten härtbaren Phenolharz-haltigen Bindemittels.

Als Härtungsmittel (auch Aktivator genannt) kommen hier alle bekannten und/oder üblicherweise verwendeten Härtungsmittel (Aktivatoren) in Frage. Für Resolharze besonders geeignet sind Carbonylgruppen tragende Verbindungen wie z. B. Carbonsäuren wie α-Hydroxycarbonsäuren sowie Ester, insbesondere Ester von organischen Säuren, insbesondere Laktone, zum Beispiel γ-Butyrolacton, Propiolacton und ε-Caprolacton weitere Beispiele für Härtungsmittel sind Propylencarbonat oder Ester eines C₁₋₁₀ Alkylmonoalkohols oder Ester eines Polyols mit einer C₁₋₁₀ Carbonsäure. Außerdem geeignet sind DiEster wie Dimethylsuccinat, -glutarat, -adipat, -2-methylglutarat usw. (Gruppe der sogenannten DBE = Di-basic-ester). Weitere als Aktivator geeignete Ester sind Glyzerin-Triacetat, -diacetat und monoacetat sowie Ester der Kieselsäure wie z. B. Tetraethylsilikat sowie Titanate, Zirkonate, Aluminate, Stannate, Zinkate etc.

Besonders bevorzugt ist ein Verfahren wie vorstehend beschrieben, insbesondere wie vorstehend als bevorzugt bezeichnet, worin
(1) der teilchenförmige anorganische Füllstoff eine Mischung aus Al₂O₃- haltigem Pfannen- oder Ofenausbruch und zusätzlichem Al₂O₃ umfasst und mindestens 40 Gew.-%, vorzugsweise mindestens 80 Gew.-% Al₂O₃ umfasst, bezogen auf die Gesamtmenge des Füllstoffs,
(2) das härtbare Phenolharz-haltige Bindemittel in einer Menge von 5 bis 20 Gew.-%, bevorzugt von 5 bis 18 Gew.-% und besonders bevorzugt von 5 bis 16 Gew.-% eingesetzt wird, bezogen auf die Gesamtmenge des Füllstoffs und aus einer wässrigen Lösung eines Kaliumhydroxid-haltigen und/oder Natriumhydroxid-haltigen alkalischen Phenol-Formaldehyd-Resols mit folgenden Eigenschaften besteht:
   a) ein Feststoffgehalt von 20 bis 75 Gew.-%, vorzugsweise 50 bis 75 Gew.-%,
   b) ein molekulares Gewichtsmittel (M_{w}) von 500 bis 2000,
   c) ein Verhältnis Formaldehyd zu Phenol von 1,2 zu 1 bis 2,6 zu 1, und
   d) ein Verhältnis der Summe der Moläquivalente von KOH und/oder NaOH zu Phenol von 0,5 zu 1 bis 1,5 zu 1
      und worin das Härtungsmittel mindestens einen aktiven Ester in einer Menge von 10 bis 100 Gew.-%, bezogen auf das Gewicht der wässrigen Lösung des Kaliumhydroxid-haltigen und/oder Natriumhydroxid-haltigen alkalischen Phenol-Formaldehyd-Resols enthält oder daraus besteht,
(3) das Härtungsmittel in einer Menge von 2 bis 20 Gew.-%, vorzugsweise 5 bis 20 Gew.-%, eingesetzt wird, bezogen auf das Gewicht des Füllstoffs, und
(4) zusätzlich zu dem im härtbaren Phenolharz-haltigem Bindemittel enthaltenem Wasser, Wasser in einer Menge von 0,5 bis 15 Gew.-%, vorzugsweise 0,5 bis 10 Gew.-%, eingesetzt wird, bezogen auf das Gewicht des Füllstoffs.

Bei Füllstoffen mit besonders geringer Dichte führt das erfindungsgemäße Verfahren unter Umständen nicht zu einem festen Granulat. In solchen Fällen kann es notwendig sein, die Mischung umfassend teilchenförmigen anorganischen Füllstoff, härtbares Phenolharz-haltiges Bindemittel und Härtungsmittel vor oder während der Härtung durch Druck zu verdichten. Bevorzugt ist deshalb auch ein Verfahren wie vorstehend beschrieben und besonders wie vorstehend als bevorzugt bezeichnet, worin die Mischung umfassend Füllstoff, härtbares Phenolharz-haltiges Bindemittel und Härtungsmittel vor und/oder während der Härtung durch Druck verdichtet wird.

Zum Mischen der Ausgangsstoffe des erfindungsgemäßen Granulats sind alle üblichen verwendeten Mischer geeignet, insbesondere Pflugschar-Mischer (z.B. Lödige- oder EMT-Mischer), Turbomischer, Fluidmischer, Wirbelschichtgranulatoren, Konusschneckenmischer (z.B. Nautamischer) etc.

Ebenfalls ein Gegenstand der vorliegenden Erfindung ist die Verwendung eines erfindungsgemäßen Granulats wie vorstehend beschrieben und insbesondere wie vorstehend als bevorzugt bezeichnet als Verschlackungsmittel und/oder Schlackenkonditionierer. Besonders bevorzugt ist die Verwendung eines erfindungsgemäßen Granulats wie vorstehend beschrieben und insbesondere wie vorstehend als bevorzugt bezeichnet als Verschlackungsmittel Ebenfalls ein Gegenstand der vorliegenden Erfindung ist die Verwendung eines erfindungsgemäßen Granulats wie vorstehend beschrieben und insbesondere wie vorstehend als bevorzugt bezeichnet als Flussmittel.

Ein weiterer Gegenstand der vorliegenden Erfindung ist die Verwendung eines härtbaren Phenolharzes als Bindemittel für oxidische Stäube bei der Herstellung eines Verschlackungsmittels, eines Schlackenkonditionierers und oder eines Flussmittels. Die für diese Verwendung bevorzugten Phenolharze sind die vorstehend beschriebenen Phenolharze, insbesondere die vorstehend als bevorzugt beschriebenen Phenolharze. Die für diese Verwendung bevorzugten oxidischen Stäube sind die vorstehend beschriebenen Metalloxid-haltigen feinteiligen anorganischen Füllstoffe, insbesondere die vorstehend als bevorzugt beschriebenen Metalloxid-haltigen feinteiligen anorganischen Füllstoffe.

Im Folgenden wird die Erfindung anhand von Beispielen näher erläutert:

### Beispiel 1: Herstellung eines Granulats aus STAUB A, Harz A und Aktivator B

STAUB A ist ein industrielles Abfallprodukt, das gemäß Röntgenfluoreszenzanalyse die folgenden Hauptbestandteile hat:

| Bestandteil | Menge [Gew.-%]* |
|---|---|
| Al₂O₃ | 48,00 |
| SiO₂ | 20,17 |
| Fe₂O₃ | 1,67 |
| MgO | 1,21 |
| CaO | 1,15 |
| TiO₂ | 0,90 |
| ZrO₂ | 3,6 |
| Kohlenstoff | 23,4 |
| Summe 100,10 | |

| | |
|---|---|
| * Bezogen auf die Gesamtmasse von STAUB A. | |

Der durch REM-Untersuchung ermittelte Mittelwert der Teilchengröße von STAUB A betrug 1,33 µm. Die größte gemessene Teilchengröße betrug 12,17 µm.

Aktivator B besteht aus 50% Triethylenglykoldiacetat, 5-12,5% Dimethyladipat, 27,5-32,5% Dimethylglutarat und 7,5-12,5% Dimethylsuccinat.

Harz A ist ein Phenol-Resol mit einer Viskosität von 50 - 130 mPa*s 5 bei 20°C.

In einem Pflugschar-Mischer (der Firma Lödige) wurden 500 kg des Füllstoffs STAUB A vorgelegt. 15 L Wasser wurden zugegeben und es wurde anschließend eine Minute gemischt. Anschließend wurden 45 kg Akt. B zugegeben und es wurde nochmals eine Minute gemischt. Zum Schluss wurden 75 kg Harz A zugegeben und es wurde anschließend 4 bis 5 Minuten gemischt. Das entstandene Produkt wurde in einen Vorratsbehälter gegeben. Es entstand direkt ein Granulat, das gut rieselfähig und schüttbar war. Ein späteres Brechen über einen Backenbrecher oder dergleichen war nicht notwendig. Die Wandungen des Mischers waren im Wesentlichen frei von Rückständen und Verunreinigungen.

### Beispiel 2: Herstellung eines Granulats aus Staub B, Harz A und Aktivator A.

Staub B ist ein industrielles Abfallprodukt, das gemäß Röntgenfluoreszenzanalyse die folgenden Hauptbestandteile hat:

| Bestandteil | Menge [Gew.-%]* |
|---|---|
| Al₂O₃ | 91,48 |
| SiO₂ | 2,86 |
| CaO | 2,06 |
| Rest unbestimmt. | |

| | |
|---|---|
| * Bezogen auf die Gesamtmasse von Staub B. | |

Der durch REM-Untersuchung ermittelte Mittelwert der Teilchengröße von Staub B betrug 1,57 µm. Die größte gemessene Teilchengröße betrug 7,37 µm.

Aktivator A ist Triacetin.

Zu Harz A vgl. Beispiel 1.

In einem Nauta-Mischer wurden 500 kg des Füllstoffs Staub B vorgelegt. 25 kg Wasser wurden zugegeben und es wurde anschließend 1-2 Minuten gemischt. Anschließend wurden 63 kg Harz A zugegeben und es wurde danach für 3-4 Minuten gemischt. Anschließend wurden 12,5 kg Aktivator A zugegeben und nach der Zugabe für weitere 3 Minuten gemischt. Das entstandene Produkt wurde in einen Vorratsbehälter gegeben. Nach 30 Minuten konnte ein zügiges Härten der Mischung beobachtet werden. Es entstand direkt ein Granulat, das gut schüttbar war.

### Beispiel 3: Herstellung eines Granulats aus Staub C, Harz A und Aktivator A oder Aktivator B.

Staub C ist ein industrielles Abfallprodukt, das gemäß Röntgenfluoreszenzanalyse die folgenden Hauptbestandteile hat:

| Bestandteil | Menge [Gew.-%]* |
|---|---|
| Al₂O₃ | 2,04 |
| SiO₂ | 2,37 |
| Fe₂O₃ | 1,75 |
| MgO | 55,03 |
| CaO | 4,02 |
| Kohlenstoff | 28,25 |
| Summe 93,46, Rest unbestimmt. | |

| | |
|---|---|
| * Bezogen auf die Gesamtmasse von Staub C. | |

Der durch REM-Untersuchung ermittelte Mittelwert der Teilchengröße von Staub C betrug 2,7 µm. Die größte gemessene Teilchengröße betrug 28,87 µm.

Zu Aktivator A und Aktivator B siehe die Beispiele 1 bzw. 2.

In einem Labormischer wurden 100 Gewichtsteile des Füllstoffs Staub C vorgelegt, 20 Gewichtsteile Wasser wurden zugegeben und es wurde 2-3 Minuten gemischt. Anschließend wurden 9 Gewichtsteile Aktivator A zugegeben und es wurde nochmals 2-3 Minuten gemischt. Zum Schluss wurden 15 Gewichtsteile Harz A zugegeben und es wurde anschließend 4 bis 5 Minuten gemischt. Es wurde nach 10-15 min. ein festes, gut abrollendes Granulat erhalten; die Mischer-Wandungen waren frei von Rückständen oder Verunreinigungen.

Bei Wiederholung des Verfahrens mit Aktivator B anstatt Aktivator A und bei Zugabe des Bindemittels vor Zugabe des Aktivators wurde nach ca. 30 Minuten ein festes Granulat erhalten.

## Patentansprüche

1. Granulat, in dem höchstens 10 Gew.-% der Teilchen des Granulats, bezogen auf die Gesamtmenge des Granulats, eine Teilchengröße von unter 1 mm besitzen,
wobei das Granulat ein gehärtetes Phenolharz-haltiges Bindemittel und einen durch das Bindemittel gebundenen teilchenförmigen anorganischen Füllstoff umfasst.
wobei mindestens 10 Gew.-% der Teilchen des gebundenen Füllstoffes, bezogen auf die Gesamtmenge des gebundenen Füllstoffes, eine Teilchengröße von kleiner als 1 mm besitzen.

2. Granulat nach Anspruch 1, wobei
- der teilchenförmige anorganische Füllstoff Zerkleinerungsrückstände von Pfannen- oder Ofenausbruch enthält
und/oder
- der teilchenförmige anorganische Füllstoff zu mindestens 40 Gew.-% bezogen auf das Gesamtgewicht des teilchenförmigen anorganischen Füllstoffs aus Zerkleinerungsrückständen besteht, insbesondere aus Zerkleinerungsrückständen von Pfannen- oder Ofenausbruch, die durch Zerkleinern mit einem Backenbrecher oder durch Mahlen entstanden sind.

3. Granulat nach einem der vorangehenden Ansprüche, worin mindestens 50 Gew.-%, bevorzugt mindestens 70 Gew.-% und besonders bevorzugt mindestens 80 Gew.-% des teilchenförmigen anorganischen Füllstoffes aus einem oder mehreren Metalloxiden bestehen.

4. Granulat nach einem der vorangehenden Ansprüche, worin der Füllstoff eine Mischung aus (i) Zerkleinerungsrückständen von Al₂O₃-haltigem Pfannen- oder Ofenausbruch und (ii) zusätzlichem Al₂O₃ umfasst.

5. Granulat nach einem der vorangehenden Ansprüche, worin der pH-Wert einer zehnprozentigen wässrigen Aufschlämmung des Füllstoffs alkalisch ist.

6. Granulat nach einem der vorangehenden Ansprüche, worin das Granulat Kaliumionen und/oder Natriumionen enthält.

7. Granulat nach einem der vorangehenden Ansprüche, worin das gehärtete Phenolharz-haltige Bindemittel herstellbar ist durch Härten eines flüssigen, bevorzugt eines flüssigen und wasserlöslichen und besonders bevorzugt durch Härten eines flüssigen, wasserlöslichen und durch Ester organischer Säuren härtbaren Phenolharzes oder durch Härten einer Mischung umfassend ein solches härtbares Phenolharz.

8. Granulat nach einem der vorangehenden Ansprüche, insbesondere nach Anspruch 5, worin das gehärtete Phenolharz-haltige Bindemittel ein gehärtetes Resol umfasst oder daraus besteht

9. Verfahren zur Herstellung eines Granulatsnach einem der vorangehenden Ansprüche, mit den folgenden Schritten:
(1) Bereitstellen oder Herstellen einer Mischung umfassend teilchenförmigen anorganischen Füllstoff, härtbares Phenolharz-haltiges Bindemittel, Härtungsmittel, gegebenenfalls Wasser und gegebenenfalls weitere Komponenten,
(2) Härten lassen der Mischung, so dass das gehärtete Phenolharz-haltige Bindemittel Füllstoffpartikel bindet,
(3) Granulieren der zumindest teilweise gehärteten Mischung.

10. Verfahren nach Anspruch 9, worin mindestens ein teilchenförmiger anorganischer Füllstoff wie in einem der Ansprüche 2 bis 4 definiert verwendet wird.

11. Verfahren nach einem der Ansprüche 9 bis 10, worin das härtbare Phenolharz-haltige Bindemittel aus einer wässrigen Lösung eines Kaliumhydroxid-haltigen oder Natriumhydroxid-haltigem alkalischen Phenol-Formaldehyd-Resols mit folgenden Eigenschaften besteht:
a) ein Feststoffgehalt von 20 bis 75 Gew.-%, ein durchschnittliches molekulares Gewichtsmittel (_{Mw}) von 500 bis 2000,
b) ein Molverhältnis von Formaldehyd zu Phenol von 1,2 zu 1 bis 2,6 zu 1, und
c) ein Molverhältnis der Gesamtsumme der Moläquivalente von KOH und NaOH zu Phenol von 0,5 zu 1 bis 1,5 zu 1
und worin das Härtungsmittel mindestens einen aktiven Ester in einer Menge von 10 bis 100 Gew.-%, bezogen auf das Gewicht der wässrigen Lösung des Kaliumhydroxid-haltigen und/oder Natriumhydroxid-haltigen alkalischen Phenol-Formaldehyd-Resols enthält oder daraus besteht.

12. Verfahren nach einem der Ansprüche 9 bis 11, worin die Menge des eingesetzten härtbaren Phenolharz-haltigen Bindemittels im Bereich von 0,1 bis 40 Gew.-%, bevorzugt 5 bis 30 Gew.-%, besonders bevorzugt 5 bis 20 Gew.-%, ganz besonders bevorzugt von 5 bis 18 Gew.-% und am meisten bevorzugt von 5 bis 16 Gew.-% liegt, bezogen auf das Gewicht des eingesetzten Füllstoffs.

13. Verfahren nach einem der Ansprüche 9 bis 12, worin
(1) der teilchenförmige anorganische Füllstoff eine Mischung aus Al₂O₃- haltigem Pfannen- oder Ofenausbruch und zusätzlichem Al₂O₃ umfasst und mindestens 40 Gew.-%, vorzugsweise mindestens 80 Gew.% Al₂O₃ umfasst, bezogen auf die Gesamtmenge des Füllstoffs,
(2) das härtbare Phenolharz-haltige Bindemittel in einer Menge von 5 bis 20 Gew.-%, bevorzugt von 5 bis 18 Gew.-% und besonders bevorzugt von 5 bis 16 Gew.-% eingesetzt wird, bezogen auf die Gesamtmenge des Füllstoffs und ein härtbares Phenolharz-haltiges Bindemittel wie in Anspruch 11 definiert ist,
(3) das Härtungsmittel in einer Menge von 2 bis 20 Gew.-% eingesetzt wird, bezogen auf das Gewicht des Füllstoffs, und
(4) zusätzlich zu dem im härtbaren Phenolharz-haltigem Bindemittel enthaltenem Wasser, Wasser in einer Menge von 0,5 bis 15 Gew.-% verwendet wird, bezogen auf das Gewicht des Füllstoffs.

14. Verwendung eines Granulats nach einem der Ansprüche 1 bis 8
- als Verschlackungsmittel und/oder Schlackenkonditionierer.
oder
- Flussmittel.

## Claims

1. Granulate, in which at most 10 wt.% of the particles of the granulate, relative to the total amount of granulate, have a particle size of less than 1mm,
wherein the granulate comprises a cured phenolic resin-containing binding agent and a particle-like inorganic filler bonded by the binding agent,
wherein at least 10 wt.% of the particles of the bonded filler, relative to the total amount of bonded filler, have a particle size of less than 1 mm.

2. Granulate according to claim 1, wherein
- the particle-like inorganic filler contains the crushing residues of spent pan or furnace linings,
and/or
- the particle-like inorganic filler consists of at least 40 wt.% crushing residues relative to the total weight of the particle-like inorganic filler, in particular the crushing residues of spent pan or furnace linings, which are formed by crushing with a jaw crusher or by milling.

3. Granulate according to any one of the preceding claims, wherein at least 50 wt. %, preferably at least 70 wt.% and particularly preferably at least 80 wt.% of the particle-like inorganic filler consists of one or more metal oxide.

4. Granulate according to any one of the preceding claims, wherein the filler comprises a mixture of (i) crushing residues of Al₂O₃-containing spent pan or furnace linings and (ii) additional Al₂O₃.

5. Granulate according to any one of the preceding claims, wherein the pH value of a ten per cent aqueous slurry of the filler is alkali.

6. Granulate according to any one of the preceding claims, wherein the granulate contains potassium ions and/or sodium ions.

7. Granulate according to any one of the preceding claims, wherein the cured phenolic resin-containing binding agent can be produced by curing a liquid, preferably a liquid and water-soluble phenolic resin and particularly preferably by curing a liquid, water-soluble phenolic resin curable by esters of organic acids or by curing a mixture comprising such a curable phenolic resin.

8. Granulate according to any one of the preceding claims, in particular according to claim 5, wherein the cured phenolic resin-containing binding agent comprises or consists of a cured Resol.

9. Method for producing a granulate according to any one of the preceding claims comprising the following steps:
(1) preparing or producing a mixture comprising particle-like inorganic filler, curable phenolic resin-containing binding agent, curing agents, possibly water and possibly additional components,
(2) allowing the mixture to cure, so that the cured phenolic resin-containing binding agent binds filler particles,
(3) granulating the at least partly cured mixture.

10. Method according to claim 9, wherein at least one particle-like inorganic filler is used as defined in one of claims 2 to 4.

11. Method according to one of claims 9 to 10, wherein the curable phenolic resin-containing binding agent consists of an aqueous solution of a potassium hydroxide-containing or sodium hydroxide-containing alkali phenol formaldehyde Resol with the following properties:
a) a solids content of 20 to 75 wt.%, an average molecular weight (M_{w}) of 500 to 2,000,
b) a molar ratio of formaldehyde to phenol of 1.2 to 1 to 2.6 to 1 and
c) a molar ratio of the total sum of molar equivalents of KOH and NaOH to phenol of 0.5 to 1 to 1.5 to 1
and wherein the curing agent contains or consists of at least one active ester in an amount of 10 to 100 wt.% , relative to the weight of the aqueous solution of the potassium hydroxide-containing and/or sodium-hydroxide-containing alkali phenol formaldehyde Resol.

12. Method according to any one of claims 9 to 11, wherein the amount of curable phenol resin-containing binding agent used is in a range of 0.1 to 40 wt.%, preferably 5 to 30 wt.%, particularly preferably 5 to 20 wt.%, very particularly preferably 5 to 18 wt.% and most preferably 5 to 16 wt.%, relative to the weight of the used filler.

13. Method according to any one of claims 9 to 12, wherein
(1) the particle-like inorganic filler comprises a mixture of Al₂O₃- containing spent pan or furnace lining and additional Al₂O₃ and at least 40 wt.%, preferably at least 80 wt.% Al₂O₃, relative to the total amount of filler,
(2) the curable phenolic resin-containing binding agent is used in an amount of 5 to 20 wt.%, preferably 5 to 18 wt.% and particularly preferably 5 to 16 wt.%, relative to the total amount of filler and a curable phenolic resin-containing binding agent as defined as in claim 11,
(3) the curing agent is used in an amount of 2 to 20 wt.%, relative to the weight of the filler, and
(4) in addition to the water contained in the curable phenolic resin-containing binding agent, water is used in an amount of 0.5 to 15 wt. %, relative to the weight of the filler.

14. Use of a granulate according to any one of claims 1 to 8
- as a slagging agent and/or slag conditioner
or
- fluxing agent.

## Revendications

1. Granulé, dans lequel au maximum 10% en poids des particules du granulé possèdent une taille particulaire inférieure à 1 mmpar rapport à la quantité totale du granulé,
dans lequel le granulé comprend un liant contenant une résine phénolique durci et une charge inorganique particulaire liée par le liant,
dans lequel au moins 10% en poids des particules de la charge liée, par rapport à la quantité totale de la charge liée, possèdent une taille particulaire inférieure à 1 mm.

2. Granulé selon la revendication 1, dans lequel :
- la charge inorganique particulaire contient des résidus de broyage de fragments de garnissages de poches ou de fours,
et/ou
- la charge inorganique particulaire est constituée à hauteur d'au moins 40 % en poids, par rapport au poids total de la charge inorganique particulaire, de résidus de broyage, en particulier de résidus de broyage de fragments de garnissages de poches ou de fours, qui sont obtenus par broyage avec un concasseur à mâchoires ou par pulvérisation.

3. Granulé selon l'une quelconque des revendications précédentes, dans lequel au moins 50 % en poids, de préférence au moins 70 % en poids et, mieux encore, au moins 80 % en poids de la charge inorganique particulaire sont constitués d'un ou plusieurs oxydes métalliques.

4. Granulé selon l'une quelconque des revendications précédentes, dans lequel la charge comprend un mélange constitué de (i) résidus de broyage de fragments de garnissages de poches ou de fours contenant du Al₂O₃ et de (ii) Al₂O₃ supplémentaire.

5. Granulé selon l'une quelconque des revendications précédentes, dans lequel la valeur du pH d'une suspension aqueuse à dix pour cent de la charge est alcaline.

6. Granulé selon l'une quelconque des revendications précédentes, dans lequel le granulé contient des ions de potassium et/ou des ions de sodium.

7. Granulé selon l'une quelconque des revendications précédentes, dans lequel le liant contenant une résine phénolique durcie peut être produit par durcissement d'une résine phénolique liquide, de préférence d'une résine phénolique liquide et hydrosoluble et, mieux encore, par durcissement d'une résine phénolique liquide, hydrosoluble et durcissable par des esters d'acides organiques ou par durcissement d'un mélange comprenant une telle résine phénolique durcissable.

8. Granulé selon l'une quelconque des revendications précédentes, en particulier selon la revendication 5, dans lequel le liant contenant une résine phénolique durci comprend un résol durci ou en est constitué.

9. Procédé de fabrication d'un granulé selon l'une quelconque des revendications précédentes, comprenant les étapes suivantes :
(1) la préparation ou la fabrication d'un mélange comprenant une charge inorganique particulaire, un liant contenant une résine phénolique durcissable, des agents de durcissement, éventuellement de l'eau et éventuellement d'autres composants,
(2) le durcissement du mélange de sorte que le liant contenant une résine phénolique durci lie les particules de charge, et
(3) la granulation du mélange au moins partiellement durci.

10. Procédé selon la revendication 9, dans lequel au moins une charge inorganique particulaire est utilisée telle qu'elle est définie dans l'une quelconque des revendications 2 à 4.

11. Procédé selon l'une quelconque des revendications 9 à 10, dans lequel le liant contenant une résine phénolique durcissable est constitué d'une solution aqueuse d'un résol de phénol-formaldéhyde alcalin contenant de l' hydroxyde de potassium ou de l'hydroxyde de sodium avec les propriétés suivantes :
a) une teneur en solides de 20 à 75 % en poids, une moyenne en poids moléculaire (M_{w}) de 500 à 2000,
b) un rapport molaire du formaldéhyde au phénol de 1,2 à 1 à 2,6 à 1, et
c) un rapport molaire de la somme totale des équivalents molaires de KOH et de NaOH au phénol de 0,5 à 1 à 1,5 à 1,
et dans lequel l'agent de durcissement contient au moins un ester actif en quantité de 10 à 100 % en poids, par rapport au poids de la solution aqueuse du résol de phénol-formaldéhyde alcalin contenant de l'hydroxyde de potassium et/ou de l'hydroxyde de sodium ou en est constitué.

12. Procédé selon l'une quelconque des revendications 9 à 11, dans lequel la quantité du liant contenant une résine phénolique durcissable se situe dans la plage de 0,1 à 40 % en poids, de préférence de 5 à 30 % en poids, mieux encore de 5 à 20% en poids, bien mieux encore de 5 à 18 % en poids et de manière nettement préférée de 5 à 16 % en poids, par rapport au poids de la charge utilisée.

13. Procédé selon l'une quelconque des revendications 9 à 12, dans lequel :
(1) la charge inorganique articulaire comprend un mélange de fragments de garnissages de poches ou de fours contenant du Al₂O₃ et de Al₂O₃ supplémentaire et comprend au moins 40 % en poids, de préférence au moins 80 % en poids de Al₂O₃, par rapport à la quantité totale de la charge,
(2) le liant contenant une résine phénolique durcissable est utilisé en quantité de 5 à 20 % en poids, de préférence de 5 à 18 % en poids et, mieux encore, de 5 à 16 % en poids, par rapport à la quantité totale de la charge et un liant contenant une résine phénolique durcissable, tel qu'il est défini dans la revendication 11,
(3) l'agent durcissant est utilisé en quantité de 2 à 20 % en poids par rapport au poids de la charge, et
(4) outre l'eau contenue dans le liant contenant une résine phénolique durcissable, de l'eau est utilisée en quantité de 0,5 à 15 % en poids par rapport au poids de la charge.

14. Utilisation d'un granulé selon l'une quelconque des revendications 1 à 8
- comme agent de scorification et/ou comme agent de conditionnement de scories,
ou
- comme fondant.
